# EUROPÄISCHE PATENTSCHRIFT

(11) **EP 1 616 477 B1**
(45) Veröffentlichungstag und Bekanntmachung des Hinweises auf die Patenterteilung: **23.01.2008**
(21) Anmeldenummer: 05105262.9
(22) Anmeldetag: 15.06.2005
(51) Int. Cl.: A01F 15/14

(54) **Vorrichtung zum Sichern eines losen Garnendes auf einem Rundballen**
Device to fix a loose end of twine on a round bale
Dispositif pour fixer un bout de fil libre sur une balle ronde

(30) Priorität: 08.07.2004 DE 102004033088
(43) Veröffentlichungstag der Anmeldung: 18.01.2006
(73) Patentinhaber: DEERE & COMPANY, Moline, Illinois 61265-8098 (US)
(72) Erfinder: Viaud, Jean, 70100 Gray (FR)
(74) Vertreter: Holst, Sönke

(56) Entgegenhaltungen:
- EP-A- 0 535 532
- EP-A- 0 672 340
- EP-A- 1 064 839
- EP-A- 1 321 028

## Beschreibung

Die Erfindung betrifft eine Vorrichtung zum Sichern eines losen Garnendes auf einem Rundballen mittels eines Bandes, wobei das Band mittels einer durch einen Motor antreibbaren Vorschubeinrichtung einem Ballenpressraum zuführbar ist, in dem es im Bereich des losen Garnendes um einen Rundballen wickelbar ist, wobei die Vorschubeinrichtung durch eine Freilaufkupplung mit dem Motor verbunden ist, die nur in einer ersten Bewegungsübertragungsrichtung eine Antriebsverbindung zwischen dem Motor und der Vorschubeinrichtung herstellt, wobei die Antriebsverbindung hergestellt ist, wenn sich der Motor in einer ersten Richtung bewegt und die Vorschubeinrichtung das Band in Richtung auf den Ballenpressraum fördert.

Die DE 41 32 664 A beschreibt eine Rundballenpresse mit einer Garnbindevorrichtung und einer Vorrichtung zum Sichern eines auf der Umfangsfläche des Rundballens aufliegenden Garnendes. Die Sicherung des Garnendes erfolgt nach einer Ausführungsform mittels eines Bandes, das klebend oder anderweitig selbsthaftend ausgebildet sein kann und mittels zweier Zuführrollen, von denen wenigstens eine angetrieben wird, und einem Leitblech zu einem Einlaßspalt für das Erntegut geführt wird. Dort wird das Band von dem sich drehenden Ballen erfaßt und um diesen gewickelt. Das Abtrennen des Bands von der Vorratsrolle erfolgt durch Abschalten des Antriebs der Zuführrollen, was zum Abreißen des Bands führt. Dabei ist als nachteilig anzusehen, dass die Geschwindigkeit der Zuführrollen mit der Geschwindigkeit des Ballens zu synchronisieren ist, was insbesondere bei variablen Ballengrößen relativ aufwändig sein kann. Das Abtrennen des Bandes durch Anhalten der Zuführwalzen kann sich insbesondere bei Band aus elastischem Material als problematisch erweisen.

Eine andere Vorrichtung zum Sichern eines losen Garnendes auf einem Rundballen wird in der DE 199 30 674 A beschrieben. Dort wird ein loses Ende des Bandes mittels einer motorisch bewegten Leitfläche an ein angetriebenes Förderelement angedrückt, insbesondere an einen Riemen, und von diesem mitgenommen und an den Umfang des Ballens verbracht. Das Abtrennen des Bandes von seiner Vorratsrolle erfolgt durch eine separate Trennvorrichtung, die sich aus einer Leiste und daran angeordneten spitzen Stiften zusammensetzt. Die bewegbare Leitfläche bringt das Band in Anlage an die Trennvorrichtung, sobald der Ballen hinreichend umwickelt ist, so dass der um den Ballen gewickelte Bandabschnitt vom verbleibenden Vorrat abgetrennt wird. Hier erfolgt der Vorschub des Bandes nur durch das Förderelement. Es besteht daher keine Möglichkeit, das Band weiter vorzuschieben, falls das Förderelement es nicht annimmt, z. B. auf Grund von Verschmutzung.

Die EP 0 672 340 A zeigt eine Ballenpresse mit einer Zuführeinrichtung für Band zum Umwickeln eines Rundballens, die über einen Freilauf angetrieben wird. Dort ist keine Umwicklung des Ballens mit Garn und keine Sicherung für die freien Garnenden vorgesehen.

Das der Erfindung zu Grunde liegende Problem wird darin gesehen, eine gegenüber dem Stand der Technik verbesserte Vorrichtung zum Sichern eines losen Garnendes auf einem Rundballen bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Freilaufkupplung ist zwischen dem Motor und der Vorschubeinrichtung angeordnet. Die Freilaufkupplung überträgt nur in einer bestimmten, ersten Bewegungsübertragungsrichtung eine Bewegung vom Motor auf die Vorschubeinrichtung. Die Kraftübertragung findet dann statt, wenn sich der Motor in eine erste Richtung dreht und die Vorschubeinrichtung das vorzugsweise selbsthaltende Band in Richtung auf den Ballenpressraum zu fördert. Die vom Motor bereitgestellte und von der Freilaufkupplung übertragene Bewegung kann linear oder eine Drehbewegung sein. Der Motor ist bidirektional antreibbar und durch eine zweite Freilaufkupplung mit einer Trenneinrichtung verbunden, deren Position durch den Motor verstellbar ist. Eine Antriebsverbindung zwischen dem Motor und der Trenneinrichtung wird durch die zweite Freilaufkupplung nur hergestellt, wenn sich der Motor in eine zweite Richtung bewegt, die der oben erwähnten ersten Richtung entgegengesetzt ist. Dadurch erreicht man, dass der Motor zusätzlich zum Bewegen der Trenneinrichtung verwendet werden kann. Die Trenneinrichtung dient zum Abtrennen des um den Rundballen gewickelten Bandes vom verbleibenden Bandvorrat.

In den Zeichnungen ist ein nachfolgend näher beschriebenes Ausführungsbeispiel der Erfindung dargestellt. Es zeigt:
- Fig. 1: eine Rundballenpresse in Seitenansicht und in schematischer Darstellung,
- Fig. 2: eine vergrößerte seitliche Ansicht des rückwärtigen Bereichs der Rundballenpresse mit einer Vorrichtung zum Sichern eines losen Garnendes auf einem Rundballen,
- Fig. 3: den rückwärtigen Bereich der Rundballenpresse aus Figur 2 in einer rückwärtigen Ansicht,
- Fig. 4: die Vorrichtung aus den Figuren 2 und 3 in perspektivischer Darstellung,
- Fig. 5: eine vergrößerte Ansicht des Motors und der Vorschubeinrichtung.

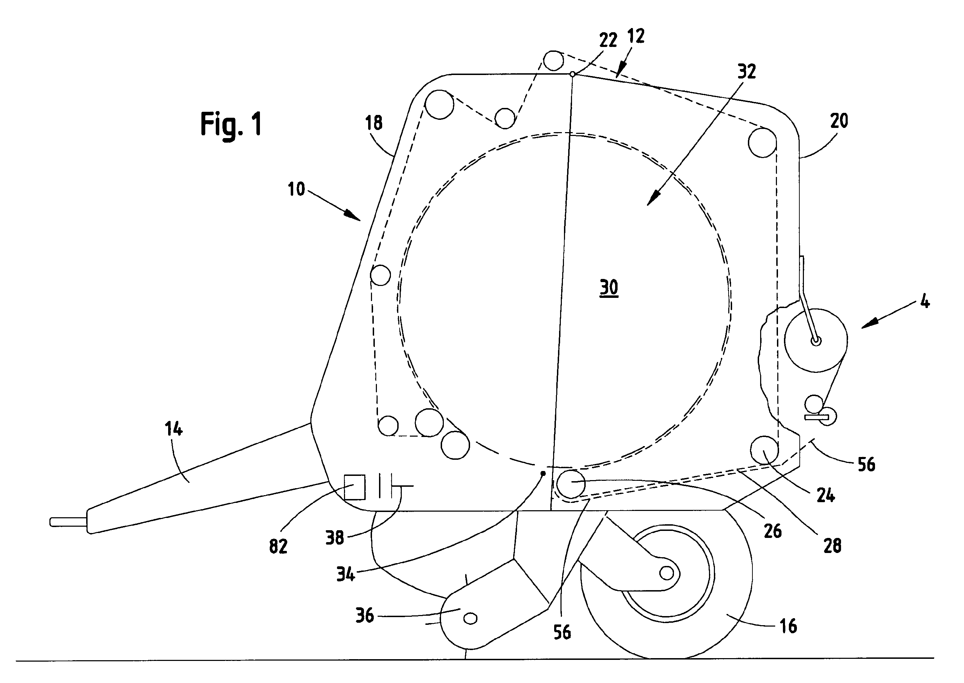

Die Figur 1 zeigt eine Rundballenpresse 10 mit einem Gehäuse 12, das mittels einer Deichsel 14 an einen nicht dargestellten Ackerschlepper angehängt werden kann, um bezüglich der Figur 1 nach links in einer Fahrtrichtung über ein Feld gezogen zu werden, und sich auf Rädern 16 abstützt. Das Gehäuse 12 setzt sich aus einer vorderen, starren Gehäusehälfte 18 und einer rückwärtigen, schwenkbaren Gehäusehälfte 20 zusammen, die in einem oben liegenden Gelenk 22 schwenkbar miteinander verbunden sind. Das Gehäuse 12 trägt eine Vielzahl von Walzen, von denen eine rückwärtige untere Walze 24 und eine vordere untere Walze 26 der rückwärtigen Gehäusehälfte 20 gezeigt sind. Über die Walzen 24, 26 verlaufen mehrere nebeneinander angeordnete endlose Förderelemente 28, die mit Seitenwänden 30 des Gehäuses 12 einen Ballenpreßraum 32 größtenteils umgeben. In diesem Ausführungsbeispiel sind die Förderelemente 28 als Riemen ausgebildet. In dem unteren Bereich des Ballenpreßraums 32 ist ein Einlass 34 vorgesehen, der rückwärtig von der Walze 26 begrenzt wird und von einer Pick-Up 36 aufgenommenes Gut in den Ballenpreßraum 32 eintreten läßt.

Unterhalb der Deichsel 14 und im Bereich des Einlasses 34 ist eine Garnbindevorrichtung 38 vorgesehen, mit der Garn um den sich drehenden Rundballen gewickelt werden kann, um diesen zu binden. In diesem Ausführungsbeispiel ist die Garnbindevorrichtung 38 so ausgebildet, daß die letzten Garnwindungen an der in Vorwärtsfahrtrichtung linken Seite des Rundballens aufgelegt werden. Eine soweit beschriebene Rundballenpresse 10 ist bereits im Stand der Technik bekannt und bedarf somit keiner weiteren Beschreibung.

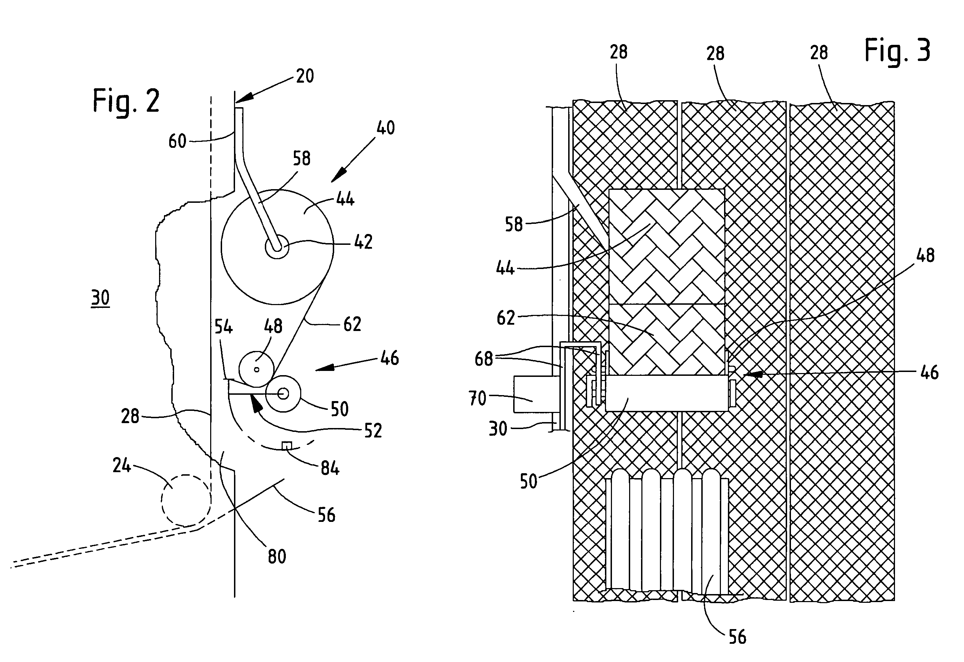

Die Figur 2 zeigt die rückwärtige Gehäusehälfte 20 von links. In dieser Darstellung ist insbesondere die rechte rückwärtige Seitenwand 30, ein Förderelement 28 und eine Vorrichtung 40 zum Sichern der losen Garnenden auf der Oberfläche des Rundballens zu sehen. Die Vorrichtung 40 umfasst unter anderem einen Rollenträger 42, einen rollenförmigen Bandvorrat 44, eine Vorschubeinrichtung 46 mit zwei zusammenwirkenden Zuführwalzen 48, 50, eine Trennvorrichtung 52, einen Amboss 54 und eine Leiteinrichtung 56.

Die Vorrichtung 40 ist hier in Verbindung mit einer Rundballenpresse 10 mit einem größenvariablen Ballenpreßraum 32 gezeigt, der von riemenförmigen Förderelementen 28 umgeben ist. Abweichend hiervon kann diese Vorrichtung 40 auch an einer Rundballenpresse 10 mit einem Ballenpressraum 32 unveränderlicher Größe und an einer anderen Stelle als an der Rückwand 60 der rückwärtigen Gehäusehälfte 20 vorgesehen werden. Ebenso können anstelle der Riemen auch Ketten oder Rollen verwendet werden.

Der Rollenträger 42 ist in der Form einer starren Achse ausgebildet und durch einen winkelförmigen Träger 58 an der Rückwand 60 gehalten. Der Rollenträger 42 ist zur Aufnahme einer Rolle des rollenförmigen Bandvorrats 44 vorgesehen, wobei zwischen dem Bandvorrat 44 und dem Rollenträger 42 eine Bremse (nicht gezeigt) vorgesehen sein kann, die die Aufgabe hat, den Bandvorrat 44 an einer freien Drehbewegung auf dem Rollenträger 42 zu hindern.

Der Bandvorrat 44 enthält eine große Menge von dünnem, elastischem, festem und haftendem Band 62. Es ist vorzugsweise netzartig. Die Haftung kann durch einen ein- oder zweiseitig auf das Band 62 aufgebrachten Kleber, durch die Netzform und/oder durch Adhäsion erreicht werden. Ist ein Bandvorrat 44 verbraucht, kann er durch einen neuen ersetzt werden. Es können beliebige Rollenträger 42 für den Bandvorrat 44 verwendet werden. Hier wird insbesondere auf bekannte Halterungen für Farbbänder oder auf Rollen vorliegendes Druckmaterial in Druckern, z. B. Thermodruckern, verwiesen. Der Rollenträger 42 umfasst auch Mittel zum Fixieren des Bandvorrats 44 in seitlicher Richtung.

Anhand der Figuren 2 bis 4 ist erkennbar, dass das vom Bandvorrat 44 abgewickelte Band 62 durch einen zwischen den Zuführwalzen 48, 50 der Vorschubeinrichtung 46 gebildeten Spalt hindurchgeführt wird. Die Zuführwalzen 48, 50 sind mit parallel zueinander verlaufenden Achsen versehen und werden vorzugsweise durch Federkraft aneinander gedrückt. Sie könnten auch starr relativ zueinander angeordnet sein. In beiden Fällen können sie zumindest außenseitig mit in sich elastischem Material versehen werden, um eine hinreichend sichere Führung und Förderung des Bandes 62 zu erzielen. Anstelle von Zuführwahlen 48, 50 kann eine beliebige andere Vorschubeinrichtung 46 gewählt werden, beispielsweise unter Verwendung einen Spalt zur Aufnahme des Bandes 62 einschließender Förderbänder oder einer Walze und einer feststehenden Fläche, zwischen denen das Band 62 durchgeführt wird. Die Vorschubeinrichtung kann auch eine lineare Bewegung vollführen, indem sie ein festgehaltenes Bandende geradlinig oder auf einer gekrümmten Bahn in Richtung auf die Fördermittel 28 bewegt.

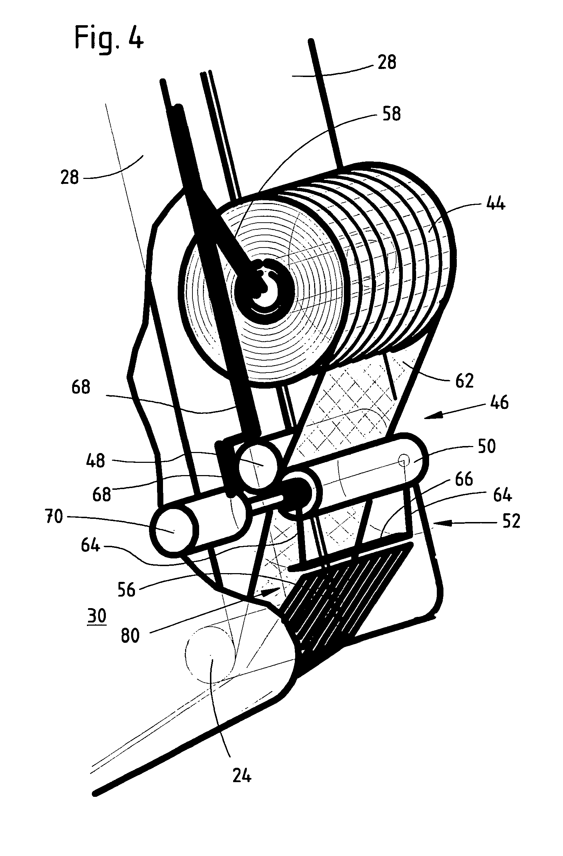

Die Zuführwalzen 48 und 50 sind drehbar an einer Halterung 68 gelagert, die mit der Seitenwand 30 und/oder der Rückwand 60 verbunden ist. Die Halterung 68 trägt auch einen Motor 70. Anders als in den Figuren 3 und 4 zur Vereinfachung dargestellt ist, kann die Halterung 68 auch die anderen Enden der Zuführwalzen 48, 50 haltern.

Die Trennvorrichtung 52 umfasst eine sich über die Breite des Bands 62 erstreckende Leiste 66, die durch endseitige Schenkel 64 schwenkbar an der Halterung 68 gelagert ist. Die Schwenkachse der Trennvorrichtung 52 verläuft koaxial zur Drehachse der Zuführwalze 50. An der Leiste 66 sind mehrere sich von der Leiste 66 in Richtung auf das Band 62 zu erstreckende Stifte und/oder Zacken angebracht. Anstelle der Stifte bzw. Zacken könnten auch Zähne vorgesehen sein, mit denen es möglich ist, das Band zu perforieren, so dass es reißt, wenn es durchdrungen wird. Auf der der Trennvorrichtung 52 gegenüberliegenden Seite des Bandes 62 stromab der Zuführwalzen 48, 50 befindet sich der Amboss 54. Wird die Trennvorrichtung 52 in die in Figur 2 dargestellte Position verbracht, befindet sich das Band 62 zwischen der Leiste 66 und dem Amboss 54.

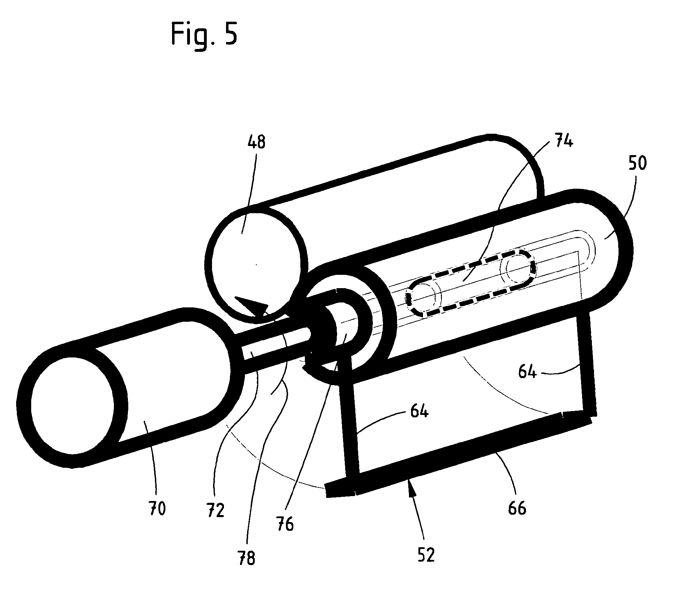

Die Antriebsverbindung zwischen dem Motor 70, der Zuführwalze 50 und der Trennvorrichtung 52 ist in der Figur 5 schematisch dargestellt. Eine Welle 72 des Motors 70 ist durch eine erste Freilaufkupplung 74 mit der Zuführwalze 50 verbunden. Die Welle 72 ist weiterhin durch eine zweite Freilaufkupplung 76 mit der Trenneinrichtung 52 verbunden. Die Zuführwalze 48 wird nicht direkt angetrieben und kann sich frei drehen.

Die erste Freilaufkupplung 74 ist derart konfiguriert, dass sie ein vom angetriebenen Motor 70 bereitgestelltes Drehmoment nur dann auf die Zuführwalze 50 überträgt, wenn sich die Welle 72 in einer ersten Richtung dreht, die in der Figur 5 dem Pfeil 78 entspricht, d. h. im Gegenuhrzeigersinn, und sich die Welle 72 nicht langsamer in die erste Richtung dreht als die Zuführwalze 50.

Die zweite Freilaufkupplung 76 ist derart konfiguriert, dass sie ein vom angetriebenen Motor 70 bereitgestelltes Drehmoment nur dann auf die Trenneinrichtung 52 überträgt, wenn sich die Welle 72 in einer zweiten Richtung dreht, die der ersten Richtung entgegengesetzt ist.

Geeignete Freilaufkupplungen 74, 76 sind beispielsweise von Fahrrädern her bekannt. Es können beispielsweise Freilaufkupplungen 74, 76 mit als Sperrkörper dienenden Walzen verwendet werden, wie sie von Freilaufnaben her bekannt sind, oder mit Sperrklinken, die ebenfalls bei Freilaufnaben verwendet werden, oder mit Torsionsfedern, die dahin bestrebt sind, sich an der Welle 72 zu verhaken, wenn sie in eine Richtung dreht und freigegeben werden, wenn die Welle 72 sich in die andere Richtung dreht.

Der Motor 70 ist demnach ein birektional antreibbarer Motor. Es kann sich um einen Elektromotor handeln, insbesondere um einen Gleichstrommotor, der durch Umpolen reversierbar ist, oder einen Wechselstrommotor, dessen Ständer und Läufer zur Richtungsumkehr gegeneinander verpolt werden können. Der Motor 70 kann auch ein Hydraulikmotor oder ein pneumatischer Motor sein. Denkbar wäre auch, die Welle 72 unter Verwendung geeigneter Kupplungen und Antriebsverbindungen durch andere, insbesondere hydraulisch oder von einer Zapfwelle des Ackerschleppers angetriebene Elemente der Rundballenpresse 10 oder durch ein Federwerk oder von Hand anzutreiben. Der Motor 70 wird durch eine Steuerung 82 kontrolliert.

Der Bewegungsbereich der Trenneinrichtung 52 in die zweite Richtung, d. h. in der Figur 5 in Uhrzeigerrichtung, ist durch den Amboss 54 eingeschränkt. Um eine Beschädigung des Motors 70 zu vermeiden, wenn die Trenneinrichtung 52 am Amboss 54 anschlägt, kann ein Sensor (nicht eingezeichnet) die Position der Trenneinrichtung 52 erfassen, z. B. optisch oder mechanisch, und den Motor 70 über die Steuerung 82 abschalten, sobald die Trenneinrichtung 52 den Amboss 54 berührt. Denkbar wäre auch, den (elektrischen, pneumatischen oder hydraulischen) Strom durch den Motor 70 zu messen und ihn durch die Steuerung 82 bei einem Überschreiten eines Schwellenwerts, der durch das Anschlagen der Trenneinrichtung 52 am Amboss 54 bedingt ist, selbsttätig abzuschalten. In einer anderen Ausführungsform ist in den Antriebsstrang zwischen Motor 70 und Trenneinrichtung 52 eine Überlastkupplung, z. B. eine Rutschkupplung, eingefügt und der Motor 70 wird über einen vorbestimmten Zeitraum angetrieben. Weiterhin ist anzumerken, dass die Positionen von Amboss 54 und Leiste 66 vertauscht werden könnten, so dass dann die Leiste 66 stationär wäre und der Amboss 54 durch die zweite Freilaufkupplung 76 bewegt würde. Der Bewegungsbereich der Trenneinrichtung 52 vom Amboss 54 fort wird durch einen Anschlag 84 begrenzt.

Die Leiteinrichtung 56 erstreckt sich von einem vorderen Ende, das sich unterhalb des Förderelementes 28 und der Walze 26 befindet, nach hinten und oben bis unterhalb der Walze 24 und von dort schräg nach hinten und oben. Anhand der Figuren 1 bis 4 ist erkennbar, dass das vom Bandvorrat 44 abgewickelte Band 62 zwischen den Zuführwalzen 48, 50 und zwischen dem Amboss 54 und der Leiste 66 der Trenneinrichtung 52 hindurchgeführt ist und schließlich einen Zwischenraum 80 zwischen dem Fördermittel 28 und der Leiteinrichtung 56 erreicht. Die dem Band 62 zugewandte Oberfläche der Leiteinrichtung 56 ist mit einem relativ geringen Reibwert ausgestattet.

Nach alledem ergibt sich folgende Funktion, wobei davon ausgegangen wird, dass das Band 62 in der soeben geschilderten Weise eingelegt ist und, wie in der Figur 2 dargestellt, zwischen Amboss 54 und Trenneinrichtung 52 endet, während sich die Trenneinrichtung 52 in der in Figur 4 gezeigten Stellung befindet.

Nach einem abgeschlossenen Bindevorgang durch die Garnbindevorrichtung 38 liegen ein oder mehrere lose Garnenden auf dem linken Endbereich des Rundballens und zwar in Deckung mit dem Band 62. Die Steuerung 82 erhält ein auf diesen Sachverhalt hinweisendes Signal und veranlasst den Motor 70, die Welle 72 in die erste, in der Figur 5 durch den Pfeil 78 dargestellte Richtung zu drehen. Durch die erste Freilaufkupplung 74 wird die Zuführwalze 50 angetrieben und dreht sich bezüglich der Figuren 2, 4 und 5 im Gegenuhrzeigersinn. Eine Drehmomentübertragung von der Welle 72 über die zweite Freilaufkupplung 76 auf die Trenneinrichtung 52 findet aufgrund der gewählten ersten Drehrichtung nicht statt.

Das Band 62 wird somit sukzessive in den Zwischenraum 80 gefördert und gelangt dann in den Spalt zwischen dem Bereich des Förderelements 28 zwischen den Walzen 24, 26 und der Leiteinrichtung 56. Aufgrund einer hohen Reibung zwischen dem Band 62 und dem Förderelement 28 einerseits und einer geringen Reibung zwischen dem Band 62 und der Leiteinrichtung 56 andererseits wird das Band 62 mitgenommen und bis zu dem Einlass 34 gefördert, wo es um die Walze 26 herumläuft und in den Spalt zwischen dem Rundballen und dem Förderelement 28 gelangt. Der Rundballen nimmt das Band 62 weiter mit und wickelt es um seine Umfangsfläche im Bereich der losen Garnenden. Sobald das Fördermittel 28 und/oder der Rundballen das Band 62 erfasst hat und mitzieht, dreht sich die - nunmehr durch das Band 62 angetriebene - Zuführwalze 50 schneller als die Welle 70, was zur Folge hat, dass die erste Freilaufkupplung 74 die Antriebsverbindung zwischen der Welle 72 und der Zuführwalze 50 selbsttätig trennt. Es besteht somit keine Gefahr, dass das Band 62 dort abreißen könnte. Der Motor 70 kann weiterhin angetrieben werden, oder wenn der Steuerung 82 eine Information darüber zugeführt wird, dass der Rundballen das Band 62 mitzieht, die z. B. durch Drehzahlsensoren an einer oder beiden der Zuführwalzen 48 oder 50 und anhand der bekannten oder gemessenen Drehzahl des Motors 70 oder anhand der vom Motor 70 aufgenommenen Antriebsleistung gewonnen werden kann, selbsttätig abgeschaltet werden.

Nach mehr als einer Umdrehung des Rundballens legt sich die zweite Lage des Bandes 62 auf die erste Lage auf und haftet aufgrund der Adhäsion und/oder Netzform des Bandes und/oder des Klebemittels, so dass die losen Garnenden gesichert sind.

Sobald ein sicherer Haftschluß der Bandlagen gewährleistet ist, was sie an einer verstrichenen Zeit, durch einen Drehsensor am Bandvorrat 44 oder an einer der Zuführwalzen 48, 50 oder auf beliebige andere Weise erkennen kann, veranlasst die Steuerung 82 den Motor, die Welle 72 in die zweite Richtung zu drehen, d. h. entgegen der Richtung des Pfeils 78 in Figur 5. Nunmehr schließt die zweite Freilaufkupplung 76 die Antriebsverbindung zur Trenneinrichtung 52 und die Leiste 66 wird gegen den Amboss 54 gedreht, wodurch die dort angeordneten Stifte, Zähne, Zacken oder dergleichen in das Band 62 eindringen. Sobald das Band 62 von den überstehenden Elementen der Leiste 66 durchdrungen ist, reißt das unter Zug stehende, stromabwärts der Trenneinrichtung 52 gelegene Trum des Bandes 62 ab, während der mit dem Bandvorrat 44 verbundene Teil an der Leiste 66 gehalten wird. Da der Rollenträger 42 aufgrund der Bremse nicht oder kaum nachdreht, kommt er und der Bandvorrat 44 unmittelbar zum Stehen. Der Motor 70 wird durch die Steuerung 82 in der oben beschriebenen Weise zum Stillstand gebracht.

Anschließend wird die Welle 72 durch die Steuerung 82 für eine relativ kurze Zeitspanne wieder in die erste Richtung gedreht, um die Trenneinrichtung 52 zu entlasten, d. h. die Antriebsverbindung zwischen der Welle 72 und der Trenneinrichtung 52 zu lösen, die durch die zweite Freilaufkupplung 76 noch bereitgestellt wird. Die Trenneinrichtung 52 gelangt dann durch die Schwerkraft auf der in Figur 2 dargestellten Stellung in die Position gemäß Figur 4 und 5. Dadurch vermeidet man Förderprobleme des Bands 62 beim nächsten Wickelvorgang. Es wäre aber auch möglich, die Zugkraft des Rundballens oder Fördermittels 28 zu nutzen, mit der das Band 62 die Trenneinrichtung 52 aus der in Figur 2 dargestellten Stellung in die Stellung gemäß Figur 4 und 5 drehen kann. Denkbar wäre es auch, die Trenneinrichtung 52 durch den Druck des von den Zuführwalzen 48, 50 herangeförderten Bandes 62 zumindest soweit nach unten zu verschwenken, dass das Band 62 zwischen Amboss 54 und Trenneinrichtung 52 hindurchtreten kann. In diesen Fällen könnte die Trenneinrichtung 52 nach dem Abtrennen des Bands 62 in der in Figur 2 dargestellten Position verbleiben.

Der Motor 70 dient somit zum aktiven Zuführen des Bandes 62 zum Rundballen und zum selbsttätigen Abtrennen des Bandes 62 vom verbleibenden Bandvorrat 44.

## Patentansprüche

1. Vorrichtung (40) zum Sichern eines losen Garnendes auf einem Rundballen mittels eines Bandes (62), wobei das Band (62) mittels einer durch einen Motor (70) antreibbaren Vorschubeinrichtung (46) einem Ballenpressraum (32) zuführbar ist, in dem es im Bereich des losen Garnendes um einen Rundballen wickelbar ist, wobei die Vorschubeinrichtung (46) durch eine Freilaufkupplung (74) mit dem Motor (70) verbunden ist, die nur in einer ersten Bewegungsübertragungsrichtung eine Antriebsverbindung zwischen dem Motor (70) und der Vorschubeinrichtung (46) herstellt und die Antriebsverbindung hergestellt ist, wenn sich der Motor (70) in einer ersten Richtung bewegt und die Vorschubeinrichtung (46) das Band in Richtung auf den Ballenpressraum (32) fördert, **dadurch gekennzeichnet, dass** der Motor (70) bidirektional antreibbar ist und durch eine zweite Freilaufkupplung (76) mit einer positionsveränderlichen Trenneinrichtung (52) verbunden ist, und dass die zweite Freilaufkupplung (76) nur in einer zweiten Bewegungsübertragungsrichtung eine Antriebsverbindung zwischen dem Motor (70) und der Trenneinrichtung (52) herstellt, wobei die Antriebsverbindung der zweiten Freilaufkupplung (76) hergestellt ist, wenn sich der Motor (70) in seiner zweiten Richtung bewegt und die Trenneinrichtung (52) in eine aktive Position bewegt.

2. Vorrichtung (40) nach Anspruch 1, **dadurch gekennzeichnet, dass** die Trenneinrichtung (52) bezüglich der Förderrichtung des Bandes (62) stromab der Vorschubeinrichtung (46) angeordnet ist.

3. Vorrichtung (40) nach Anspruch 2, **dadurch gekennzeichnet, dass** die Trenneinrichtung (52) durch das Band (62) und/oder durch die Schwerkraft aus der aktiven Position in eine inaktive Position verbringbar ist.

4. Vorrichtung (40) nach einem der Ansprüche 1 bis 3, **dadurch gekennzeichnet, dass** die Bewegung der Trenneinrichtung (52) durch einen mechanischen Anschlag (84) und/oder einen Sensor begrenzt ist, der zur Erfassung der Position der Trenneinrichtung (52) eingerichtet und mit einer Steuerung (82) des Motors (70) verbunden ist.

5. Rundballenpresse (10) mit einer Vorrichtung (40) nach einem der vorhergehenden Ansprüche.

## Claims

1. Apparatus (40) for securing a loose yarn end on a round bale by means of a band (62), it being possible for the band (62) to be fed to a bale pressing space (32) by means of an advancing device (46) which can be driven by a motor (70), in which bale pressing space (32) the said band (62) can be wound around a round bale in the region of the loose yarn end, the advancing device (46) being connected to the motor (70) by a free-wheeling clutch (74) which produces a drive connection between the motor (70) and the advancing device (46) only in a first movement transmission direction and the drive connection is produced when the motor (70) moves in a first direction and the advancing device (46) conveys the band in the direction of the bale pressing space (32), **characterized in that** the motor (70) can be driven bidirectionally and is connected to a variable-position severing device (52) by a second free-wheeling clutch (76), and **in that** the second free-wheeling clutch (76) produces a drive connection between the motor (70) and the severing device (52) only in a second movement transmission direction, the drive connection of the second free-wheeling clutch (76) being produced when the motor (70) moves in its second direction and the severing device (52) moves into an active position.

2. Apparatus (40) according to Claim 1, **characterized in that** the severing device (52) is arranged downstream of the advancing device (46) with regard to the conveying direction of the band (62).

3. Apparatus (40) according to Claim 2, **characterized in that** the severing device (52) can be moved out of the active position into an inactive position by the band (62) and/or by gravity.

4. Apparatus (40) according to one of Claims 1 to 3, **characterized in that** the movement of the severing device (52) is limited by a mechanical stop (84) and/or a sensor which is set up to detect the position of the severing device (52) and is connected to a controller (82) of the motor (70).

5. Round bale press (10) having an apparatus (40) according to one of the preceding claims.

## Revendications

1. Dispositif (40) pour fixer un bout de fil libre sur une balle ronde au moyen d'une bande (62), ladite bande (62) étant acheminée au moyen d'un dispositif d'avance (46), actionnable par un moteur (70), vers une chambre de formage de balle (32), dans laquelle elle est apte à être enroulée autour d'une balle ronde dans la zone du bout de fil libre, ledit dispositif d'avance (46) étant relié au moteur (70) par l'intermédiaire d'un couplage à rotation libre (74) qui établit une liaison d'entraînement entre le moteur (70) et le dispositif d'avance (46) uniquement dans une première direction de transmission du mouvement, et la liaison d'entraînement est établie lorsque le moteur (70) se déplace dans une première direction et le dispositif d'avance (46) transporte la bande vers la chambre de formage de balle (32), **caractérisé en ce que** le moteur (70) peut être actionné de manière bidirectionnelle et est relié à un dispositif de séparation (52) à position variable, par l'intermédiaire d'un deuxième couplage à rotation libre (76), et **en ce que** le deuxième couplage à rotation libre (76) établit une liaison d'entraînement entre le moteur (70) et le dispositif de séparation (52) uniquement dans une deuxième direction de transmission du mouvement, la liaison d'entraînement du deuxième couplage à rotation libre (76) étant établie lorsque le moteur (70) se déplace dans une deuxième direction et déplace le dispositif de séparation (52) dans une position active.

2. Dispositif (40) selon la revendication 1, **caractérisé en ce que** le dispositif de séparation (52) est agencé, par référence à la direction de défilement de la bande (62), en aval du dispositif d'avance (46).

3. Dispositif (40) selon la revendication 2, **caractérisé en ce que** le dispositif de séparation (52) peut être amené par la bande (62) et/ou par la force de gravité hors de la position active dans une position inactive.

4. Dispositif (40) selon l'une quelconque des revendications 1 à 3, **caractérisé en ce que** le mouvement du dispositif de séparation (52) est limité par une butée (84) mécanique et/ou par un capteur, qui est conçu pour détecter la position du dispositif de séparation (52) et est relié à une commande (82) du moteur (70).

5. Presse à balles rondes (10) comportant un dispositif (40) selon l'une des revendications précédentes.
